# DEMANDE DE BREVET EUROPEEN

(11) **EP 0 862 996 A1**
(43) Date de publication de la demande: **09.09.1998**
(21) Numéro de dépôt: 98400510.8
(22) Date de dépôt: 04.03.1998
(51) Int. Cl.: B32B 25/20, F16L 11/04

(54) **Matériau composite à base d'un élastomère de silicone vulcanisable à chaud pour fabriquer notamment des tuyaux ou durites**

(30) Priorité: 07.03.1997 FR 9702742
(71) Demandeur: HUTCHINSON, F-75008 Paris (FR)
(72) Inventeur: Mahin, Daniel, 37510 Savonnieres (FR)
(74) Mandataire: Doireau, Marc

(57) **Abrégé**

Matériau composite à base d'un élastomère de silicone vulcanisable à chaud, en particulier pour la fabrication d'éléments tubulaires tels que des durites, du type comprenant au moins une première couche d'un élastomère de silicone vulcanisable à chaud, une couche d'un élastomère de nature différente, et une couche intermédiaire interposée entre les première et seconde couches, caractérisé en ce que :
- la première couche contient au moins une proportion de 70 à 90 parties en poids d'un élastomère de silicone vulcanisable à chaud, et une proportion de 10 à 30 parties en poids d'un élastomère du type EPDM ou EPM modifié par greffage à haut taux de silicone de l'ordre de 10 à 30% en poids de silicone,
- la couche intermédiaire est constituée à partir d'un élastomère du type EPDM ou EPM modifié par greffage à haut taux de silicone de l'ordre de 10 à 30% en poids de silicone, et
- la seconde couche est constituée à partir d'un élastomère.

L'invention s'applique notamment à la fabrication des durites.

## Description

La présente invention concerne un matériau composite à base d'un élastomère de silicone vulcanisable à chaud pour fabriquer des tuyaux et plus particulièrement des durites.

La bonne tenue d'un élastomère de silicone aux températures élevées fait que ce matériau est utilisé dans de nombreuses applications, en particulier dans le domaine automobile pour fabriquer des éléments tubulaires tels que des tuyaux, raccords ou durites qui sont situés dans l'environnement chaud d'un moteur. Ces éléments tubulaires sont notamment utilisés dans des circuits de refroidissement, dans des circuits d'huile et/ou des circuits d'air chaud pour des turbocompresseurs. Or, de tels circuits qui véhiculent des fluides doivent pouvoir fonctionner durablement et sans subir de détérioration dans un environnement dont la température peut dépasser 200° C dans des conditions normales.

Cependant, comme ce matériau est d'un coût relativement élevé, on a cherché à l'associer à un autre élastomère ayant des propriétés complémentaires pour obtenir un matériau composite performant mais d'un coût réduit. En pratique, il n'est pas indispensable d'utiliser un élastomère de silicone dans toutes les couches d'un tuyau composite, notamment au niveau de la couche interne du tuyau. En ettet, cette couche interne qui est au contact du fluide à véhiculer est généralement portée à une température plus basse que celle des autres couches grâce aux échanges thermiques avec le fluide.

Aussi envisage-t-on depuis longtemps de réaliser des tuyaux ou durites composites souples en associant à au moins une couche en élastomère de silicone vulcanisable à chaud différentes couches ayant chacune des propriétés propres, et en vulcanisant sous pression l'ensemble pour obtenir un tuyau souple dont les différentes couches seraient parfaitement adhérées entre elles d'une part, et où chaque couche conserverait ses propriétés physiques et chimiques intrinsèques sans l'apparition d'aucune dégradation liée à son contact avec une couche de nature différente d'autre part.

Or, dans la pratique, l'association d'une couche d'un élastomère de silicone vulcanisable à chaud et d'une couche d'un élastomère de nature différente n'est pas sans poser des problèmes qui sont notamment évoqués dans le Brevet FR-2 597 028 au nom de la Demanderesse. En effet, lors de la vulcanisation, il se produit des phénomènes de diffusion de certains composés chimiques d'une couche à l'autre, ce qui conduit à la détérioration des propriétés propres à chacune des couches du composite, à un mauvais état de réticulation et à un manque de liaison entre les différentes couches du composite rendant impossible la réalisation de durites ou tuyaux ayant les performances souhaitées.

Pour pallier ces inconvénients, il est connu d'intercaler entre les deux couches d'élastomère de nature différente, un mélange adhésif ou une couche de liaison pour éviter ainsi le contact direct entre les deux élastomères.

Une couche intermédiaire formée par un mélange adhésif est notamment décrite dans le Brevet FR-1 489 261, ce mélange étant constitué d'un élastomère de silicone vulcanisable à température ambiante et d'un isocyanate organique. L'adhérence entre les deux couches d'élastomère est donc obtenue par vulcanisation du mélange aux température et pression ambiantes.

Une couche intermédiaire de liaison est décrite dans le Brevet FR-2 597 028 précité, cette couche étant constituée d'un élastomère vulcanisable à chaud, en particulier un copolymère greffé EPDM-silicone. A titre d'exemple, l'EPDM est modifié par greffage de 20 à 30% d'un polysiloxane. Cette couche est interposée entre un élastomère de silicone vulcanisable à chaud et un autre élastomère de nature différente présentant des propriétés complémentaires par rapport à celles de l'élastomère de silicone, cet autre élastomère pouvant être choisi dans le groupe comprenant l'EPDM (Ethylène Propylène Diène Monomère), l'EPM (Ethylène Propylène Monomère), le caoutchouc nitrile, les fluoroélastomères, les polyéthylènes chlorosulfonés ou chlorés, les caoutchoucs acryliques et les caoutchoucs d'épichlorhydrine, un copolymère de styrène et de butadiène

En outre, on connaît du Brevet EP-0 484 245, un matériau composite comprenant au moins deux couches d'élastomère, une couche ayant une composition comprenant entre 40 et 80% en poids de caoutchouc au silicone auquel on ajoute entre 5 et 60% en poids de silice, alors que l'autre couche à une composition comprenant entre 50 et 100% en poids de caoutchouc de type éthylène propylène copolymère et/ou terpolymère auquel on ajoute entre 5 et 60% en poids de silice. Selon ce Brevet, les deux couches d'élastomère sont supposées adhérer l'une à l'autre sans qu'il soit nécessaire de prévoir un mélange adhésif ou une couche de liaison intermédiaire.

D'une manière générale, les constructeurs automobiles demandent maintenant des tuyaux et durites qui puissent atteindre un haut niveau de cohésion entre les différentes couches du matériau composite.

Or, l'expérience montre qu'au travers des procédés de fabrication couramment utilisés pour la fabrication de tels produits, notamment l'opération comprenant l'extrusion ou l'enroulement des couches l'une sur l'autre suivie d'une opération de formage par entringlage sur un mandrin métallique et de vulcanisation sous pression de vapeur, les niveaux de cohésion entre les différentes couches sont de loin insuffisants pour la fabrication de durites à géométrie complexe ou de tuyaux droits sans rencontrer de multiples défauts de décollement et/ou de cloquage entre les couches.

Le but de l'invention est donc de reprendre les principes établis dans le Brevet FR-2 597 028 pour la fabrication de tuyaux ou durites multiformes en améliorant considérablement le niveau de cohésion entre les couches, afin de supprimer complètement les défauts tels que ceux rencontrés jusqu'à maintenant.

A cet effet, l'invention propose un matériau composite à base d'un élastomère de silicone vulcanisable à chaud, en particulier pour la fabrication d'éléments tubulaires tels que des durites, du type comprenant au moins une première couche d'un élastomère de silicone vulcanisable à chaud, une seconde couche d'un élastomère de nature différente, et une couche intermédiaire de liaison interposée entre les deux couches d'élastomère, caractérisé en ce que:
- la première couche contient au moins une proportion de 70 à 90 parties en poids d'un élastomère de silicone vulcanisable à chaud, et une proportion de 10 à 30 parties en poids d'un élastomère du type EPDM ou EPM modifié par greffage à haut taux de silicone de l'ordre de 10 à 30% en poids de silicone,
- la couche intermédiaire est constituée à partir d'un élastomère du type EPDM ou EPM modifié par greffage à haut taux de silicone de l'ordre de 10 à 30% en poids de silicone, et
- la seconde couche est constituée à partir d'un élastomère ayant des propriétés complémentaires de celles de l'élastomère de silicone.

Lorsqu'on fabrique un tuyau ou une durite à partir de ce matériau composite, la première couche précitée qui est à base d'élastomère de silicone vulcanisable à chaud forme généralement le revêtement extérieur du tuyau ou de la durite, qui est mis directement au contact d'un environnement chaud pouvant être compris entre 180 et 250°C lorsque l'environnement est celui d'un moteur par exemple.

La première couche du matériau composite contient également un agent de vulcanisation du type peroxyde organique dans une proportion de l'ordre de 1 à 5 parties en poids, et une base colorante à base de silicone dans une proportion de l'ordre de 2 à 5 parties en poids.

Avec un matériau composite ayant une telle composition, la couche d'élastomère de silicone conserve ses propriétés fonctionnelles essentielles qui sont notamment la tenue à haute température et le gonflement dans les huiles et solvants d'hydrocarbures, ainsi que la possibilité d'être teintée selon des couleurs très spécifiques qui sont notamment exigées par les constructeurs automobiles. En effet, ces derniers imposent généralement une teinte précise par circuit utilisant des tuyaux ou durites, dont cette couche d'élastomère forme le revêtement extérieur. L'aspect teinté du tuyau ou de la durite est obtenu en ajoutant dans l'élastomère de silicone, qui est translucide, des charges ou plastifiants de natures diverses tels que le kaolin, la silice, la craie ou une forte quantité d'un élastomère non translucide.

La composition de la couche d'élastomère de silicone selon l'invention possède ainsi des propriétés spécifiques qui sont globalement équivalentes à celles d'un élastomère de silicone vulcanisable, et cette composition présente un aspect globalement identique tout en créant une affinité améliorée avec la couche intermédiaire.

Pour augmenter notablement le pouvoir d'adhésion de la couche intermédiaire sur la couche d'élastomère de silicone, on ajoute à l'élastomère d'EPDM greffé silicone de la couche intermédiaire :
- un élastomère de silicone pur dans une proportion de l'ordre de 5 à 30 parties en poids et à basse viscosité,
- un promoteur d'adhésion de type silane dans une proportion de l'ordre de 1 à 5 parties en poids,
- un agent de vulcanisation de type peroxyde organique semblable à celui utilisé pour la couche d'élastomère de silicone, mais à une dose plus élevée dans une proportion de l'ordre de 5 à 10 parties en poids pour assurer un maximum de sites d'accrochage chimique propices à l'adhésion, et
- une charge claire de type silice à faible granulométrie dans une proportion de l'ordre de 10 à 50 parties en poids, car cette couche intermédiaire peut être colorée différemment de la couche externe.

Lorsque l'on fabrique un tuyau ou une durite, la couche intermédiaire est de préférence noyée dans la couche d'élastomère de silicone qui forme le revêtement extérieur du tuyau ou de la durite. De ce fait, cette couche intermédiaire est moins exposée à la température du milieu environnant, et le matériau de base tel qu'un EPDM ou EMP greffé silicone qui constitue cette couche, est bien adapté dans ce cas.

D'une manière générale, la couche intermédiaire du matériau composite a au moins une épaisseur égale à 0,2 mm.

L'élastomère entrant dans la composition de la seconde couche peut être par exemple :
- un élastomère choisi dans la famille des éthylènes propylènes copolymères ou terpolymères, ou
- un élastomère choisi dans la famille des EPDM ou EPM.

Une telle couche va adhérer tout naturellement à la couche intermédiaire, et cette adhérisation sera d'autant meilleure avec une vulcanisation faite à partir d'un peroxyde organique.

En variante, on peut également constituer la seconde couche à partir d'un copolymère de styrène et de butadiène (SBR) qui a la propriété d'être auto-adhérisant.

En outre, on peut même envisager de réaliser cette seconde couche à partir d'un élastomère de toute nature comme par exemple le polychloroprène, les caoutchoucs nitriles, les caoutchoucs hydrogénés, les élastomères fluorés et les élastomères acryliques, c'est-à-dire que l'on peut utiliser tout élastomère vulcanisable ayant des propriétés complémentaires de celles d'un élastomère de silicone.

Dans le cas d'un tuyau ou d'une durite, cette seconde couche forme généralement la couche interne qui est mise directement au contact du fluide à véhiculer.

Selon un exemple de réalisation particulier, le matériau composite comprend :
- une couche d'un mélange constitué de 70 parties en poids d'élastomère de silicone vulcanisable à chaud, 30 parties en poids d'élastomère à haut taux de greffage en silicone, 2 parties en poids de peroxyde de dicunyle et 4 parties en poids de base colorante de silicone,
- une couche intermédiaire constituée de 90 parties en poids d'un élastomère EPDM à haut taux de greffage en silicone, 10 parties en poids de silice à fine granulométrie de l'ordre de 270-300 m²/gr en surface spécifique BET, 10 parties en poids d'un élastomère de silicone vulcanisable à chaud, 8 parties en poids de peroxyde de dicunyle, 2 parties en poids de base colorante de silicone, 1 partie en poids de promoteur d'adhérence de type silane, et une armature textile qui peut être réalisée sous la forme d'un tricot continu en fils d'aramide, de polyester ou de rayonne, et
- une seconde couche réalisée à partir d'un matériau EPDM vulcanisable par des peroxydes organiques.

Avec ce type de matériau composite, on peut fabriquer un tube ou une durite dont la couche interne en contact avec le fluide à véhiculer est constituée par la seconde couche précitée qui est réalisée en extrusion sur un mandrin rigide et sur une épaisseur de l'ordre de 3 mm, une couche intermédiaire de fine épaisseur de l'ordre de 0,4 mm déposée par enrubannage d'une feuille calandrée, et une couche externe réalisée par extrusion sur une épaisseur de l'ordre de 1,5 à 2 mm et réalisée à partir de la première couche précitée.

Une durite ainsi réalisée présente un haut niveau d'adhésion entre les couches sans aucun risque de cloquage ou de décollement, et un état de présentation extérieur complètement assimilable à celui des durites en élastomère de silicone.

D'une manière générale, l'ordre des couches est réversible, c'est-à-dire que la couche de silicone généralement externe pour les tuyaux peut être aussi bien réalisée en interne, ainsi que toute combinaison des couches entre elles, dès l'instant où chaque couche est bien séparée par une couche intermédiaire d'épaisseur suffisante et égale à au moins 0,2 mm.

## Revendications

1. Matériau composite à base d'un élastomère de silicone vulcanisable à chaud, en particulier pour la fabrication d'éléments tubulaires tels que des durites, du type comprenant au moins une première couche d'un élastomère de silicone vulcanisable à chaud, une couche d'un élastomère de nature différente, et une couche intermédiaire interposée entre les première et seconde couches, caractérisé en ce que :
- la première couche contient au moins une proportion de 70 à 90 parties en poids d'un élastomère de silicone vulcanisable à chaud, et une proportion de 10 à 30 parties en poids d'un élastomère du type EPDM ou EPM modifié par greffage à haut taux de silicone de l'ordre de 10 à 30% en poids de silicone,
- la couche intermédiaire est constituée à partir d'un élastomère du type EPDM ou EPM modifié par greffage à haut taux de silicone de l'ordre de 10 à 30% en poids de silicone, et contient également une proportion d'élastomère de silicone pur de l'ordre de 10 à 50 parties en poids, et
- la seconde couche est constituée à partir d'un élastomère ayant des propriétés complémentaires de celles de l'élastomère de silicone constituant la première couche.

2. Matériau composite selon la revendication 1, caractérisé en ce que la couche intermédiaire contient également un agent de vulcanisation du type peroxyde organique à dose relativement élevée de l'ordre de 5 à 10 parties en poids.

3. Matériau composite selon la revendication 1 ou 2, caractérisé en ce que la couche intermédiaire contient en plus une charge claire du type silice à fine granulométrie dans une proportion de l'ordre de 10 à 50 parties en poids.

4. Matériau composite selon l'une quelconque des revendications 1 à 3, caractérisé en ce que la couche intermédiaire a une épaisseur au moins égale à 0,2 mm.

5. Matériau composite selon l'une quelconque des revendications précédentes, caractérisé en ce que la première couche contient également un agent de vulcanisation du type peroxyde organique dans une proportion de l'ordre de 1 à 5 parties en poids et une base colorante de silicone dans une proportion de l'ordre de 2 à 5 parties en poids.

6. Matériau composite selon l'une quelconque des revendications précédentes, caractérisé en ce que le matériau composite comprend :
- une couche d'un mélange constitué de 70 parties en poids d'élastomère de silicone vulcanisable à chaud, 30 parties en poids d'élastomère à haut taux de greffage en silicone, 2 parties en poids de peroxyde de dicunyle et 4 parties en poids de base colorante de silicone,
- une couche intermédiaire constituée de 90 parties en poids d'un élastomère EPDM à haut taux de greffage en silicone, 10 parties en poids de silice à fine granulométrie de l'ordre de 270-300 m²/gr en surface spécifique BET, 10 parties en poids d'un élastomère de silicone pur vulcanisable à chaud et à basse viscosité, 8 parties en poids de peroxyde de dicunyle, 2 parties en poids de base colorante de silicone, 1 partie en poids de promoteur d'adhérence de type siliane, et une armature textile réalisée sous la forme d'un tricot continu en fils d'aramide par exemple, et
- une seconde couche réalisée à partir d'un matériau EPDM vulcanisable par des peroxydes organiques.

7. Durite fabriquée à partir d'un matériau composite tel que défini par l'une des revendications précédentes, caractérisé en ce que ladite première couche forme le revêtement extérieur de la durite sur une épaisseur de l'ordre de 1,5 à 2 mm, en ce que ladite seconde couche forme la partie interne de la durite en contact avec un fluide à véhiculer et sur une épaisseur de l'ordre de 3 mm, et en ce que ladite couche intermédiaire a une épaisseur de l'ordre de 0,4 mm.
